# EUROPÄISCHE PATENTSCHRIFT

(11) **EP 1 760 333 B1**
(45) Veröffentlichungstag und Bekanntmachung des Hinweises auf die Patenterteilung: **24.11.2010**
(21) Anmeldenummer: 06017764.9
(22) Anmeldetag: 25.08.2006
(51) Int. Cl.: F16B 37/06

(54) **In ein Loch einer Platte einführbares Mutterteil für ein Befestigungsmittel**
Female member of a fastening device, insertable in a hole in a plate
Elément femelle d'un dispositif de fixation, à insérer dans un trou dans une plaque

(30) Priorität: 31.08.2005 DE 102005041350
(43) Veröffentlichungstag der Anmeldung: 07.03.2007
(73) Patentinhaber: EJOT GmbH & Co. KG, 57334 Bad Laasphe (DE)
(72) Erfinder: Christ, Eberhard Dr., 99897 Tambach-Dietharz (DE); Göring, Marko, 99867 Gotha (DE)
(74) Vertreter: Bardehle, Heinz

(56) Entgegenhaltungen:
- EP-A1- 0 780 581
- EP-B1- 0 140 568
- WO-A-2006/061203
- DE-A1- 2 217 438
- DE-A1- 4 141 616
- DE-A1- 4 402 550
- DE-U1- 20 201 962
- US-A- 5 636 953

## Beschreibung

Die Erfindung bezieht sich auf in ein Loch einer Platte einführbares Mutterteil mit einem die Platte durchsetzenden Rohrstück für ein darin einsetzbares Befestigungsmittel, insbesondere Schraube, und mit einer an der Platte anlegbaren radialen Erweiterung des Rohrstücks.

Ein derartiges Mutterteil ist in der EP 0 358 896 B1 offenbart. Das bekannte Mutterteil besteht aus einer beidseitig offenen Hülse mit Innengewinde, in die eine als Befestigungsmittel dienende Schraube zur Befestigung irgendeines Bauteils eingedreht werden kann. Das Mutterteil ist mit einem Flansch versehen, der mit seiner einen Seite einer Platte zugewandt ist, in die das Mutterteil eingesetzt ist. Zwischen die betreffende Seite des Flansches und die betreffende Oberfläche des Mutterteils ist ein ringartiger Klebefilm eingelegt, der durch eine von außen aufgebrachte Erhitzung erweicht wird und damit den Flansch an der Platte anklebt. Die Erhitzung wird dabei durch ein erwärmtes ringartiges Werkzeug erzeugt, das auf die Platte aufgelegt wird. Die Durchführung der Erwärmung stellt dabei eine schwierige Handhabung dar, da hierzu das Werkzeug besonders in Kontakt mit der Platte festgehalten werden muss. Es umgibt nämlich den Kopf eines in das Mutterteil eingeschraubten Bolzens, ohne von diesem festgehalten zu werden. Der Wärmefluss verläuft dabei vom äußeren Rand des Werkzeuges in die Platte und von dieser gewissermaßen von rückwärts in den Klebefilm hinein, wobei dann darauf gewartet werden muss, bis der Klebefilm erhitzt und wieder gekühlt ist, damit das Mutterteil zusammen mit dem Bolzen nicht aus der Platte herausfallen kann.

Eine ähnliche Gestaltung eines an einer Platte anbringbaren Mutterteils ist der US-PS 5,636,953 zu entnehmen. Gemäß dieser Patentschrift wird zwischen einen flansch eines in das Loch einer Platte eingesetzten Mutterteils und die Platte eine ringartige Scheibe aus einem aufschmelzbaren Kunststoff eingesetzt. In einem Ofen wird dann der Kunststoff aufgeschmolzen und durchdringt dabei Durchlässe in dem Flansch, womit sich zwischen Platte und Mutterteil eine dichtende Verbindung ergibt. Auch in diesem Falle wird also die Erwärmung des Kunststoffs durch Einwirkung von außen herbeigeführt. Eine besondere Gestaltung zum Reibschweißen eines Rotationskörpers in einem Schaumstoffkörper ist in der DE 41 41 616 beschrieben. Der Rotationskörper besteht aus einem Kunststoffbolzen, der mit einem eine Erweiterung bildenden Bund versehen ist oder einem Kegelstumpf mit einer Aufnahmebohrung für eine Schraube aufweist ohne irgendeine Erweiterung und der unter Rotation auf den Schaumstoffkörper gedrückt wird, durch Reibungshitze den Schaumstoffkörper aufschmilzt und sich mit seiner Außenfläche in das so entstehende Loch in dem Kunststoffkörper einschmiegt. An irgendeinen Klebeeffekt ist dabei nicht gedacht, er wäre auch bei der Gestaltung der zu verbindenden Teile sinnlos.

Schließlich sei noch auf die EP 0 140 568 B1 verwiesen, in der ein glockenartiges Mutterteil auf eine ungelochte Platte aufgesetzt und mit einem Flansch an der Platte verklebt wird. Der hierbei verwendete Klebstoff erstreckt sich insgesamt über die der Platte zugewandte Seite des Mutterteils, deckt also deren axialen Durchbruch vollständig ab. Das Aufschmelzen des Heißschmelzklebers erfolgt durch Drehen des Mutterteils und die dabei erzeugte Reibungswärme. Für die Anbringung von Bauteilen mittels längerer Bolzen ist dieses bekannte Mutterteil darum ungeeignet, weil es einerseits keinen Durchbruch in dem Bereich mit dem Heißschmelzkleber und andererseits in der das Mutterteil tragenden Platte vorsieht, so dass es also als in ein Loch einer Platte einsetzbares Mutterteil nicht verwendet werden kann.

Der Erfindung liegt die Aufgabe zugrunde, das eingangs beschriebene Mutterteil so zu gestalten, dass es einerseits im Zusammenhang mit seiner Anbringung an einer Platte schnell und ohne komplizierte Maßnahmen an der Platte angebracht werden kann und andererseits dafür gesorgt ist, dass durch das Mutterteil mit dem darin eingesetzten Befestigungsmittel die Platte trotz des vorhandenen Lochs sicher abdichtet. Erfindungsgemäß geschieht dies dadurch, dass die Erweiterung mit einer Antriebsaufnahme versehen ist und auf ihrer der Platte zugewandten Tragfläche mit einem das Rohrstück umgebenden Ring eines durch Rotationsreibung aufschmelzbaren Heißklebers versehen ist.

Aufgrund dieser Gestaltung kann das erfindungsgemäße Mutterteil mit seinem Einbringen in das Loch einer Platte schnell und problemlos mit dieser verbunden werden, was mit einem Einsetzwerkzeug geschehen kann, das gleichzeitig auch die notwendige Drehung des Mutterteils zur Erzeugung der Rotationsreibung herbei führt. Dies kann in einem durchgängigen Arbeitsgang geschehen, wobei durch die Anordnung einer Antriebsaufnahme für einen Innenantrieb an dem Mutterteil dafür gesorgt ist, dass der diesbezügliche Antrieb direkt auf das Mutterteil einwirken kann, wodurch eine besonders energiesparende Anbringung ermöglicht wird. Anstelle eines Innenantriebs an dem Mutterteil kann man dessen Antriebsaufnahme aber auch mit einem Außenantrieb versehen.

Zweckmäßig gestaltet man die Erweiterung als radialen Flansch. Es ist aber auch möglich, der Erweiterung die Gestalt eines Konus zu geben, der dann in ein entsprechendes Loch in dem Mutterteil eingesetzt wird. Die Anbringung des Heißklebers ist nicht notwendiger Weise auf die Erweiterung bzw. den Flansch beschränkt, es ist vielmehr auch möglich, die Klebstoffschicht auf das Mutterteil auszudehnen, womit gegebenenfalls der Bereich der Verbindung zwischen Platte und Mutterteil entsprechend erweitert wird.

Um einem erschmolzenen Heißkleber die Möglichkeit zu geben, nicht nur radial nach außen entlang der Erweiterung abzuschließen, versieht man den Flansch zweckmäßig mit Durchbrüchen für den Durchlass erschmolzenen Heißklebers, der bei seinem Erschmelzen damit direkt durch den Flansch hindurch treten kann, womit irgendein Verschmieren im Bereich radial neben dem Flansch vermieden wird.

Um der Verbindung zwischen Flansch und Platte eine gewisse Flexibilität zu geben, kann man zweckmäßig den Flansch so gestalten, dass seine Stärke radial nach außen abnimmt. In diesem Falle ergibt sich eine gewisse elastische Beweglichkeit des Mutterteils gegenüber der Platte, da der Flansch wegen seines radial nach außen abnehmenden Querschnittes mit einer gewissen Elastizität an der Platte haftet. Um dem Heißkleber eine gute Verankerung auf der Tragfläche der Erweiterung zu geben, versieht man zweckmäßig die Tragfläche mit zumindest einer umlaufenden Rille.

Vorteilhaft wird das Mutterteil mit Schnapphaken versehen, die beim Einsetzen des Mutterteils in eine Platte hinter dieser einrasten. Mit Hilfe der Schnapphaken lässt sich ein Mutterteil schnell und problemlos an einer Platte vormontieren.

Das Mutterteil kann man in entgegengesetzten Richtungen an einer Platte anbringen. Hierzu wird die Tragfläche für den Heißkleber entweder auf der in Einsetzrichtung des Befestigungsmittels vom oder hinten liegenden Seite des Flansches angeordnet.

Um dem Mutterteil eine gute Dichtwirkung zu geben, kann man dieses durch einen Boden abschließen. Eine Sicherung der Lage des Mutterteils in Bezug auf die Platte lässt sich vorteilhaft auch dadurch erzielen, dass dem Mutterteil hierzu eine besondere Gestaltung gegeben wird, nämlich dadurch, dass die Erweiterung in einem dünnwandigen Halsstück in einen das Befestigungsmittel aufnehmenden Schraubdom übergeht, wobei das Halsstück unter Bildung einer Radialfaltung bei Anziehen des Befestigungsmittels derart stauchbar ist, dass die Radialfaltung sich als Sicherung nach Art von Schnapphaken hinter die Platte legt. Wenn nach Einsetzen des Mutterteils in die Platte z. B. eine Schraube in das Mutterteil eingeschraubt und dabei der Schraubdom angezogen wird, dann bildet sich die nach außen gerichtete Radialfaltung aus, die sich hinter die Platte setzt und damit das Mutterteil gegen Abziehen von der Platte sichert.

Zweckmäßig wird für das Mutterteil ein Klebstoff mit abrasivem Zusatz verwendet.

In den Figuren sind Ausführungsbeispiele der Erfindung dargestellt. Es zeigen:
- Figur 1: eine Seitensicht des Mutterteils;
- Figur 2: das gleiche Mutterteil im Schnitt längs der Linie II-II aus Figur 1;
- Figuren 3 a und b: eine Draufsicht auf ein Mutterteil mit einem Innenantrieb und einem Außenantrieb;
- Figur 4: ein Mutterteil im Schnitt mit konischem Flansch;
- Figur 5: ein Mutterteil im Schnitt mit auf das Mutterteil ausgedehnter Klebstoffschicht;
- Figur 6: ein Mutterteil im Schnitt mit radial nach außen abnehmender Stärke des Flansches;
- Figur 7: ein Mutterteil im Schnitt mit Schnapphaken;
- Figur 8: ein Mutterteil mit einem im Bereich des abschließenden Bodens angeordneten Flansch;
- Figur 9: ein Mutterteil eines mit Durchbrüchen versehenen Flansches, angebracht an einer Platte;
- Figur 10: das Mutterteil gemäß Figur 9, angebracht an einer Platte;
- Figur 11: das Mutterteil im Schnitt mit einer Tragfläche für den Heißkleber auf der hinten liegenden Seite des Flansches;
- Figur 12: das Mutterteil gemäß Figur 11 angebracht an einer Platte;
- Figuren 13 und 14: die besondere Verbindung zwischen Erweiterung und Mutterteil durch ein dünnwandiges Halsstück zur Abbildung als durch eine Radialfaltung wirkende Sicherung gegen Abziehen.

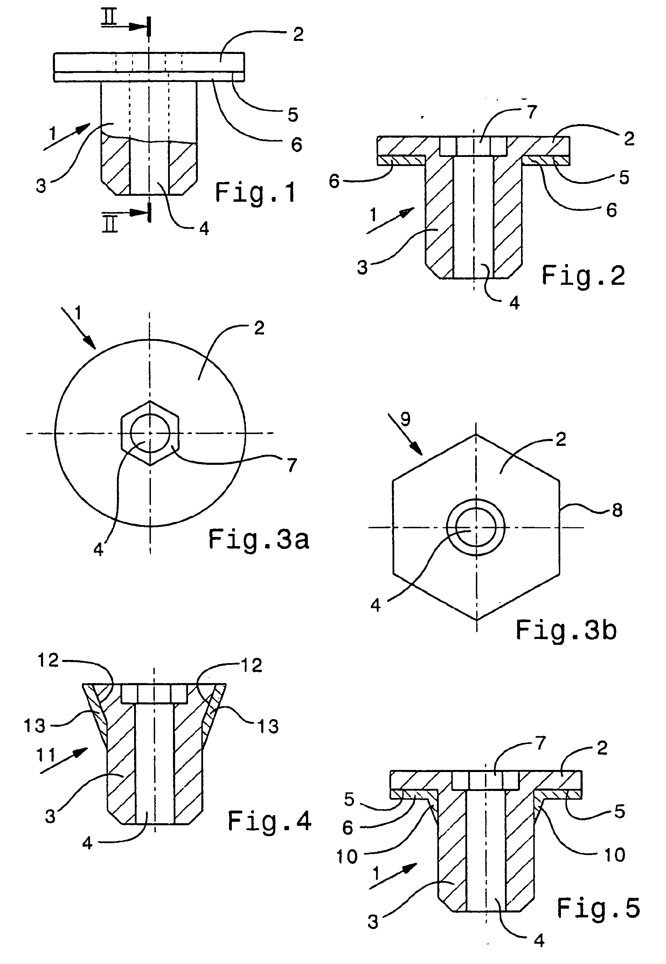

In der Figur 1 ist das Mutterteil 1 mit der als Flansch 2 ausgebildeten Erweiterung dargestellt. Das Mutterteil 1 weist das an dem Flansch 2 anschließende Rohrstück 3 (im Folgenden Schraubdom genannt) auf, der zusammen mit dem Flansch 2 von der Bohrung 4 durchsetzt ist. Die Bohrung 4 dient zur Aufnahme eines in der Figur 1 nicht dargestellten Befestigungsmittels, insbesondere einer Schraube. Auf der dem Schraubdom 3 zugewandten Seite des Flansches 2 bildet dieser die Tragfläche 5 für einen als Ring aufgetragenen Heißkleber 6, der durch Rotationsreibung aufschmelzbar ist.

In der Figur 2 ist das Mutterteil 1 gemäß Figur 1 im Schnitt längs der Linie II-II aus Figur 1 dargestellt. Aus Figur 2 geht hervor, dass die Bohrung 4 sich im Bereich des Flansches 2 zu einem Innensechskant erweitert, der hier als Innenantriebsaufnahme 7 für das Drehen des Mutterteils 1 bei seinem Anbringen an einer Platte dient.

Figur 3a zeigt das Mutterteil 1 in Draufsicht mit seinem runden Flansch 2 und der sechskantigen Innenantriebsaufnahme 7.

In Figur 3b ist eine Abwandlung in Bezug auf die Darstellung gemäß Figur 3a dargestellt, bei der es sich darum handelt, den Flansch 2 als Sechskant auszubilden, womit sich für das Anbringen des betreffenden Mutterteils 9 eine Außenantriebsaufnahme 8 ergibt.

In der Figur 4 ist ein Mutterteil 11 dargestellt, bei dem die Erweiterung als Konus 12 ausgebildet ist. Dementsprechend verläuft auch die Beschichtung 13 mit dem Heißkleber in entsprechend konischer Form. Darüber hinaus entspricht das Mutterteil 11 vollständig demjenigen gemäß den Figuren 1 und 2. In Figur 5 ist ein Mutterteil 1 dargestellt, das hinsichtlich seiner inneren Gestaltung vollständig derjenigen des Mutterteils gemäß Figur 1 entspricht, wobei allerdings eine etwas andersartige Beschichtung des Flansches 2 vorgesehen ist. Der Flansch 2 ist hier nicht nur auf seiner Tragfläche 5 mit dem Heißkleber 6 beschichtet, sondern auch der äußere Umfang des Mutterteils 1 im Bereich seines Schraubdoms 3 (Beschichtung 10), womit sich eine entsprechend erweiterte Beschichtung des Mutterteils 1 und damit deren verbesserte Befestigungsmöglichkeit ergibt.

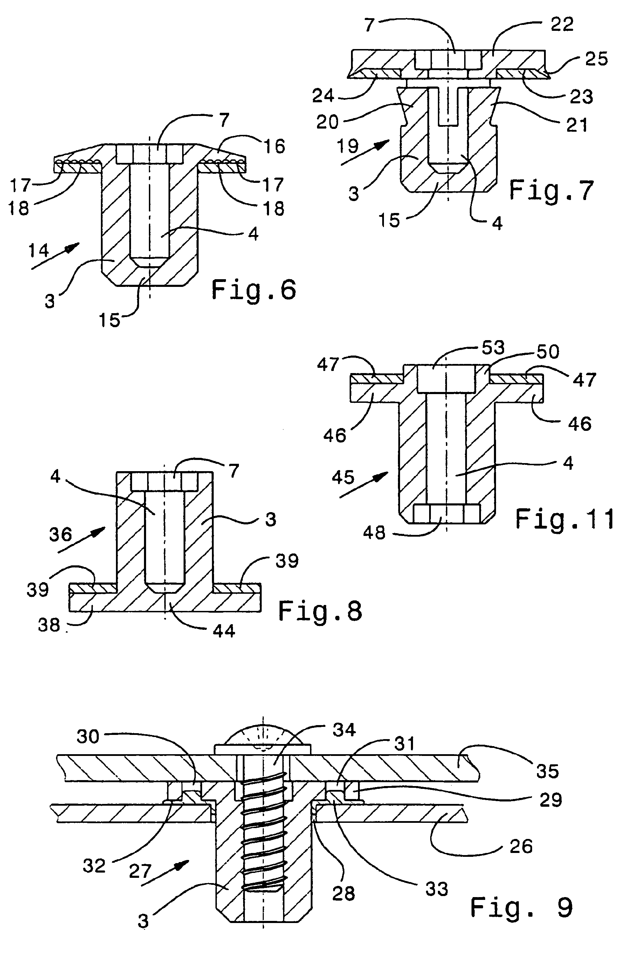

In der Figur 6 ist das Mutterteil 14 wiedergegeben, bei dem es sich im Gegensatz zu den Mutterteilen gemäß den vorstehend behandelten Figuren um ein durch einen Boden 15 abgeschlossenes Mutterteil handelt, das demgemäß eine entsprechende Dichtwirkung ausüben kann. Das Mutterteil 14 weist darüber hinaus die Besonderheit eines Flansches 16 auf, der radial nach außen in seiner Stärke abnimmt. Darüber hinaus ist auf der Tragfläche 17 eine Mehrzahl von ringartige verlaufenden Rillen 18 vorgesehen, die dazu dienen, einen aufgebrachten Heißkleber gut mit der Tragfläche 17 des Flansches 16 zu verbinden.

In der Figur 7 ist ein Mutterteil 19 dargestellt, das zusätzlich mit den beiden Schnapphaken 20 und 21 versehen ist, die beim Einsetzen des Mutterteils 19 in das Loch einer Platte von dem Innenrand des Loches zurückgedrückt werden und bei vollständigem Einsatz des Mutterteils 19 in das Loch der Platte nach außen zurück schnappen und damit das Mutterteil 19 in der erreichten Lage an einer Platte sichern. Das Mutterteil 19 ist, wie dies bei den Mutterteilen gemäß den Figuren 1 und 2 der Fall ist, mit dem Flansch 22 versehen, an dessen Tragfläche 23 die Heißkleberschicht 24 aufgebracht ist. An seinem Außenrand geht die Tragfläche 23 in die vorspringende Dichtlippe 25 über, die die Heißkleberschicht 24 ringartig umgibt und dafür sorgt, dass der Heißkleber bei seinem Erschmelzen nur geringfügig seitlich aus dem Bereich des Flansches 22 heraus tritt.

Darüber hinaus sei auf die Erläuterung zu den vorstehenden Figuren verwiesen.

In der Figur 8 ist eine Variante eines Mutterstücks dargestellt. Es handelt sich hier um das Teil 36, das im Bereich seines Bodens 44 mit dem Flansch 38 versehen ist. Auf dem Flansch 38 ist die Schicht aus Heißklebstoff 39 aufgetragen, mit der das Mutterstück 36 an eine Platte unter Drehen angedrückt werden kann, um mit dieser durch Heißkleben verbunden zu werden.

In der Figur 9 ist ein an der Platte 26 angebrachtes Mutterteil 27 dargestellt, das mit seinem Schraubdom 3 das Loch 28 in der Platte 26 durchsetzt. Das Mutterstück 27 ist mit dem Flansch 29 versehen, der die Durchbrüche 30 und 31 aufweist. Auf der Tragfläche 32 des Flansches 29 ist der Heißkleber 33 aufgebracht, der bei seiner Erwärmung durch Drehen des Mutterteils 27 in die Durchbrüche 30 und 31 wegfließen kann und damit nicht seitlich irgendwie störend in Erscheinung tritt. Der in den Durchbrüchen 30 und 31 hochsteigende Heißkleber zeigt an, dass der Klebevorgang vollzogen ist. Das Mutterteil 27 dient hier dazu, mittels der Schraube 34 an der Platte 26 befestigt zu werden, wozu die Schraube 34 in den Schraubdom 3 eingedreht ist und mit ihrem Kopf 36 das Bauteil 35 gegen den Flansch 29 und damit auch gegen die Platte 26 drückt.

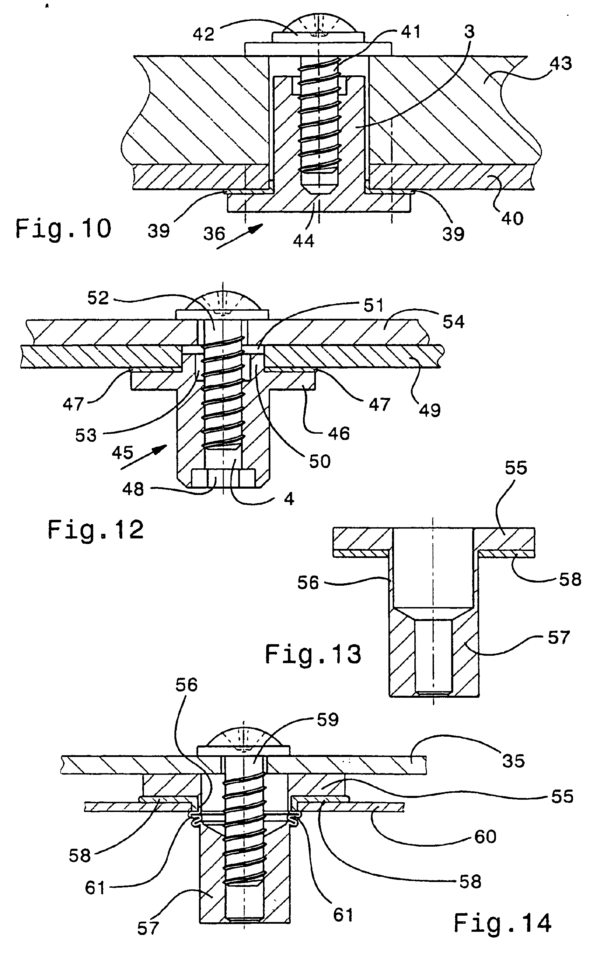

In der Figur 10 ist eine derartige Verbindung dargestellt. Hier ist gezeigt, wie das Mutterstück 36 mit seiner Schicht aus Heißkleber 39 unter Drehen gegen die Oberfläche der Platte 40 gedrückt und mit dieser verbunden ist, so dass für die Anbringung der Schraube 40 das offene Mutterstück 36 zur Verfügung steht. Mit dem Eindrehen der Schraube 40 zieht diese mit der von ihr abgestützten Scheibe 41 das Bauteil 42 an die Platte 40 heran. Da das Mutterstück 36 mit dem Boden 44 versehen ist, bildet sich somit eine dichte Verbindung aus, die einem Durchtreten von Flüssigkeit von der einen Seite des Bauteils 43 zu der betreffenden anderen Seite der Platte 40 weitgehend verhindert.

In den Figuren 11 und 12 ist eine weitere Abwandlung dargestellt, bei der es sich um das Mutterteil 45 handelt, das hier auf einer Seite des Flansches 46 mit dem Heißklebstoff 47 versehen ist, die gegenüber der Tragfläche für den Heißkleber in den vorstehend dargestellten Figuren liegt. Das Mutterteil 45 ist mit der Innenantriebsaufnahme 48 versehen, die, wie entsprechend vorstehend beschrieben, dazu dient, das Mutterteil 45 in Drehung zu versetzen und dabei den Heißklebstoff 47 zu erschmelzen, womit dann die feste Verbindung zu der Platte 49 herbeigeführt wird.

Das Mutterteil 45 ist auf der Seite des Flansches 46 mit dem Kragen 50 versehen, der in das Loch 51 der Platte 49 passt und damit beim Einsetzen des Mutterteils 45 in das Loch 51 eine Führung bildet. Die die Schraube 52 aufnehmende Bohrung 4 im Mutterteil 45 ist auf der Seite des Flansches 46 aufgeweitet zu der Entlastungsbohrung 53, die dazu dient, die Schraube 52 einfach in das Mutterteil 45 einzuführen. Die Schraube 52 dient dazu, das Bauteil 54 an der Platte 49 zu befestigen.

Eine Variante zu der in Figur 7 dargestellten Sicherung des vollständig eingesetzten Mutterteils 19 mittels der beiden Schnapphaken 20 und 21 ist in den Figuren 13 und 14 dargestellt. Dabei zeigt die Figur 13 das Mutterteil allein ohne eine Platte und Figur 14 das in eine Platte eingesetzte Mutterteil mit angezogener Schraube als in das Mutterteil einsetzbares Befestigungsmittel.

Gemäß Figur 13 geht die Erweiterung 55 über das dünnwandige Halsstück 56 in den Schraubdom 57 über, der in dem sich an das Halsstück 56 anschließenden Bereich für die Aufnahme eines Befestigungsmittels, insbesondere einer Schraube (siehe Figur 14), vorgesehen ist. Die Erweiterung 55 ist darüber hinaus mit der Heißkleberschicht 58 versehen, die dazu dient, das Mutterstück durch Heißkleben mit einer Platte zu verbinden.

Diese Verbindung ist in der Figur 14 dargestellt, und zwar mit einer als Befestigungsmittel dienenden eingedrehten Schraube 59. Die in den Schraubdom 57 eingedrehte Schraube 59 zieht den Schraubdom 57 an die Platte 60 heran, wobei sich das dünnwandige Halsstück 56 zu der Radialfaltung 61 umformt. Diese Faltung ragt radial von dem Schraubdom 57 nach außen weg und bildet damit eine Anlage an die eine Seite der Platte 60, womit eine Sicherung des Mutterteils gegen Herausziehen, ähnlich der Wirkung der in Figur 7 dargestellten Schnapphaken 20 und 21, erzielt wird. Dabei wird die Heißkleberschicht 58 zusammengequetscht und in den Ringspalt zwischen dem Halsstück 56 und dem Durchbruch in der Platte 60 eingedrückt, womit sich ein zusätzlicher Bereich der Verbindung zwischen Mutterteil und Platte ergibt.

## Patentansprüche

1. In ein Loch (28, 51) einer Platte (26, 40, 49) einführbares Mutterteil (1, 9, 11, 14, 19, 27, 36, 45) mit einem beim Einführen die Platte (26, 40, 49) durchsetzenden Rohrstück (3, 57) für ein darin einsetzbares Befestigungsmittel, insbesondere Schraube (34, 41, 52), und mit einer an der Platte anzulegenden radialen Erweiterung des Rohrstücks, **dadurch gekennzeichnet, dass** die Erweiterung (2, 8, 12, 16, 22, 29, 38, 46) mit einer Antriebsaufnahme (7, 8, 48) versehen ist und auf ihrer beim Einführen der Platte (26, 40, 49) zugewandten Tragfläche (5, 12, 17, 23, 32) mit einem das Rohrstück (3, 57) umgebenden Ring eines durch Rotationsreibung aufschmelzbaren Heißklebers (6, 10, 13, 24, 39, 47) versehen ist, wobei der Heißkleber als Ring auf die Tragfläche aufgetragen ist.

2. Mutterteil nach Anspruch 1, **dadurch gekennzeichnet, dass** das Mutterteil (1) mit einer Innenantriebsaufnahme (7) versehen ist.

3. Mutterteil nach Anspruch 1, **dadurch gekennzeichnet, dass** das Mutterteil (9) mit einer Außenantriebsaufnahme (8) versehen ist.

4. Mutterteil nach einem der Ansprüche 1 bis 3, **dadurch gekennzeichnet, dass** die Erweiterung als radialer Flansch (2) ausgebildet ist.

5. Mutterteil nach einem der Ansprüche 1 bis 3, **dadurch gekennzeichnet, dass** die Erweiterung als Konus (12) ausgebildet ist.

6. Mutterteil nach einem der Ansprüche 1 bis 5, **dadurch gekennzeichnet, dass** die Klebstoffschicht (10) auf das Mutterteil ausgedehnt ist.

7. Mutterteil nach Anspruch 4, **dadurch gekennzeichnet, dass** der Flansch (29) mit Durchbrüchen (30, 31) für den Durchlass erschmolzenen Heißklebers (33) versehen ist.

8. Mutterteil nach Anspruch 4, **dadurch gekennzeichnet, dass** die Stärke des Flansches (16) radial nach außen abnimmt.

9. Mutterteil nach einem der Ansprüche 1 bis 7, **dadurch gekennzeichnet, dass** die Tragfläche (17) mit zumindest einer umlaufenden Rille (18) versehen ist.

10. Mutterteil nach einem der Ansprüche 1 bis 9, **dadurch gekennzeichnet, dass** das Mutterteil (19) mit Schnapphaken (20, 21) versehen ist, die beim Einsetzen des Mutterteils (19) in eine Platte hinter dieser einrasten.

11. Mutterteil nach einem der Ansprüche 1 bis 10, **dadurch gekennzeichnet, dass** die Tragfläche auf der in Einsetzrichtung des Befestigungsmittels vom liegenden Seite des Flansches (38) angeordnet ist.

12. Mutterteil nach einem der Ansprüche 1 bis 10, **dadurch gekennzeichnet, dass** die Tragfläche auf der in Einsetzrichtung des Befestigungsmittels hinten liegenden Seite des Flansches (46) angeordnet ist.

13. Mutterteil nach einem der Ansprüche 1 bis 12, **dadurch gekennzeichnet, dass** es durch einen Boden (44) abgeschlossen ist.

14. Mutterteil nach Anspruch 1, **dadurch gekennzeichnet, dass** die Erweiterung (55) in einem dünnwandigen Halsstück (56) in einen das Befestigungsmittel (59) aufnehmenden Schraubdom (57) übergeht, wobei das Halsstück (56) unter Bildung einer Radialfaltung (61) bei Anziehen des Befestigungsmittels (59) derart stauchbar ist, dass die Radialfaltung (61) sich als Sicherung nach Art von Schnapphaken hinter die Platte (60) legt.

15. Mutterteil nach einem der Ansprüche 1 bis 14, **dadurch gekennzeichnet, dass** ein Klebstoff mit abrasivem Zusatz verwendet wird.

## Claims

1. Female part (1, 9, 11, 14, 19, 27, 36, 45) insertable into a hole (28, 51) in a plate (26, 40, 49), having a tubular section (3, 57) for a fastener to be placed therein, in particular a screw (34, 41, 52), which tubular section extends through the plate (26, 40, 49) upon insertion, and having a radial enlargement of the tubular section for placement against the plate, **characterized in that** the enlargement (2, 8, 12, 16, 22, 29, 38, 46) is provided with a drive receptacle (7, 8, 48) and is provided, on its support surface (5, 12, 17, 23, 32) facing the plate (26, 40, 49) upon insertion, with a ring of a hot-melt adhesive (6, 10, 13, 24, 39, 47) surrounding the tubular section (3, 57) and meltable by rotational friction, wherein the hot-melt adhesive is applied to the support surface as a ring.

2. Female part according to claim 1, **characterized in that** the female part (1) is provided with an inside drive receptacle (7).

3. Female part according to claim 1, **characterized in that** the female part (9) is provided with an outside drive receptacle (8).

4. Female part according to any one of claims 1 through 3, **characterized in that** the enlargement is designed as a radial flange (2).

5. Female part according to any one of claims 1 through 3, **characterized in that** the enlargement is designed as a cone (12).

6. Female part according to any one of claims 1 through 5, **characterized in that** the adhesive layer (10) is extended to the female part.

7. Female part according claim 4, **characterized in that** the flange (29) is provided with openings (30, 31) to allow molten hot-melt adhesive (33) to pass through.

8. Female part according to claim 4, **characterized in that** the thickness of the flange (16) decreases radially outwards.

9. Female part according to any one of claims 1 through 7, **characterized in that** the support surface (17) is provided with at least one circumferential groove (18).

10. Female part according to any one of claims 1 through 9, **characterized in that** the female part (19) is provided with snap-in hooks (20, 21) that latch behind a plate when the female part (19) is inserted therein.

11. Female part according to any one of claims 1 through 10, **characterized in that** the support surface is located on the side of the flange (36) at the front in the direction of insertion of the fastener.

12. Female part according to any one of claims 1 through 10, **characterized in that** the support surface is located on the side of the flange (46) at the rear in the direction of insertion of the fastener.

13. Female part according to any one of claims 1 through 12, **characterized in that** it is closed by a bottom (44).

14. Female part according to claim 1, **characterized in that** the enlargement (55) transitions by a thin-walled collar piece (56) to a threaded mandrel (57) that accommodates the fastener (59), wherein the collar piece (56) can be compressed during tightening of the fastener (59) with the formation of a radial fold (61) in such a manner that the radial fold (61) rests behind the plate (60) as a securing means in the manner of a snap-in hook.

15. Female part according to any one of claims 1 through 14, **characterized in that** an adhesive having an abrasive additive is used.

## Revendications

1. Elément femelle (1,9,11,14,19,27,36,45) destiné à être inséré dans un trou (28,51) d'une plaque (26,40,49) muni d'un corps tubulaire (3,57) traversant la plaque lors de l'insertion pour recevoir un dispositif de fixation insérable dedans, notamment une vis (34,41,52) et muni d'une extension radiale du corps tubulaire destinée à être apposée à la plaque, **caractérisé en ce que** l'extension (2,8,12,16,22,29,38,46) est munie d'un logement d'entraînement (7,8,48) et d'un anneau se trouvant sur la face d'appui (5,12,17,23,32) lui faisant face lors de l'insertion dans la plaque (26,40,49) et enserrant le corps tubulaire (3,57) en une colle thermofusible (6,10,13,24,39,47) fondant sous l'effet de la friction de rotation, la colle étant appliquée selon une forme annulaire sur la surface d'appui.

2. Elément femelle selon la revendication 1, **caractérisé en ce que** l'élément femelle est muni d'un logement d'entraînement interne (7).

3. Elément femelle selon la revendication 1, **caractérisé en ce que** l'élément femelle (9) est muni d'un logement d'entraînement externe (8).

4. Elément femelle selon une des revendications 1 à 3, **caractérisé en ce que** l'extension a la forme d'une bride radiale (2).

5. Elément femelle selon une des revendications 1 à 3, **caractérisé en ce que** l'extension a la forme d'un cône (12).

6. Elément femelle selon une des revendications 1 à 5, **caractérisé en ce que** la couche de colle (10) s'étend sur l'élément femelle.

7. Elément femelle selon la revendication 4, **caractérisé en ce que** la bride (29) est munie de fentes (30,31) pour la pénétration de la colle thermofusible (33).

8. Elément femelle selon la revendication 4, **caractérisé en ce que** l'épaisseur de la bride (16) va en s'amincissant radialement de l'intérieur vers l'extérieur.

9. Elément femelle selon une des revendications 1 à 7, **caractérisé en ce que** la surface d'appui (17) est munie d'au moins une rainure périphérique (18).

10. Elément femelle selon une des revendications 1 à 9, **caractérisé en ce que** l'élément femelle (19) est muni de cliquets (20,21) qui s'encliquètent derrière la plaque lors de l'insertion de l'élément femelle (19) dans une plaque.

11. Elément femelle selon une des revendications 1 à 10, **caractérisé en ce que** la surface d'appui est disposée sur la face avant de la bride (38) suivant le sens d'insertion du moyen de fixation.

12. Elément femelle selon une des revendications 1 à 10, **caractérisé en ce que** la surface d'appui est disposée sur la face arrière de la bride (46) suivant le sens d'insertion du moyen de fixation.

13. Elément femelle selon une des revendications 1 à 12, **caractérisé en ce qu'**il est obturé par un fond (44).

14. Elément femelle selon la revendication 1, **caractérisé en ce que** l'extension (55) devient une pointe filetée (57) pour recevoir le moyen de fixation (59) dotée d'une collerette (56) à paroi mince et **en ce que** la collerette (56) lors du serrage du moyen de fixation (59) forme un pli radial (61) et est écrasée de telle sorte que le pli radial (61) se met en arrière de la plaque (60) pour la bloquer comme un cliquet.

15. Elément femelle selon une des revendications 1 à 14, **caractérisé en ce qu'**une colle contenant un additif abrasif peut être utilisée.
